# EUROPEAN PATENT APPLICATION

(11) **EP 3 988 768 A1**
(43) Date of publication of application: **27.04.2022**
(21) Application number: 21202017.6
(22) Date of filing: 11.10.2021
(51) Int. Cl.: F01N 13/18, F16L 3/12, F16L 3/13

(54) **MOUNTING MEMBER**

(30) Priority: 13.10.2020 EP 20201587; 09.03.2021 EP 21161412
(71) Applicant: Illinois Tool Works Inc., Glenview, IL 60025 (US)
(72) Inventor: GIACOMELLI, Ilaria, Glenview, 60025 (US); YON, Fulvio Pacifico, Glenview, 60025 (US)
(74) Representative: HGF

(57) **Abstract**

The present invention provides for a mounting member 1 for mounting a first component, for example an exhaust system, to a second component, for example a vehicle body, the mounting member 1 comprising: a first mounting portion 2 for coupling the mounting member to the first component; a second mounting portion 2 for coupling the mounting member to the second component; and at least one linkage 3.4 comprising a sheet arranged to join the first mounting portion to the second mounting portion, wherein the sheet comprises a corrugated bend configured such that the linkage is deformable in a first direction and rigid in a second direction, the first direction being perpendicular to the second direction.

## Description

### Technical Field of Invention

The invention relates to a mounting member for mounting a first component to a second component. In particular, the invention relates to a mounting member comprising two mounting portions and first and second linkages therebetween.

### Background

It is known to provide mounting members which are manufactured from resilient materials, which are used to attenuate vibration. It is known to provide mounting members made from straps, screw fasteners, rivets and solid components. It is known to mount components using springs and/or dampeners.

Typically, a mounting member may be used to secure, as well as, dampen an exhaust of a vehicle. Thus, a mounting member has to be resilient and heard wearing, so as to withstand environmental effects, but also has to function as a secure fastener adapted to mitigate unwanted effects (e.g. transmit vibration from the engine, heat etc.).

Presently available mounting member (e.g. in the automotive industry) lack one or more of the desired features. Consequently, there is a need for an improved mounting member, especially, an improved mounting member for two or more components.

### Summary

According to the present invention, there is provided a mounting member for mounting a first component to a second component, the mounting member comprising a first mounting portion for coupling the mounting member to the first component; a second mounting portion for coupling the mounting member to the second component; and a linkage comprising a sheet arranged to join the first mounting portion to the second mounting portion, wherein the sheet comprises a bend configured such that the linkage is deformable in a first direction and rigid in a second direction, the first direction being perpendicular to the second direction.

The mounting member may comprise a plurality of linkages, each linkage comprising a sheet arranged to join the first mounting portion to the second mounting portion, wherein the sheet of each linkage comprises a bend configured such that the linkage is deformable in a first direction and rigid in a second direction, the first direction being perpendicular to the second direction. In examples, the plurality of linkages may comprise two linkages, three linkages, or four linkages.

In some examples, the mounting member may further comprise a second linkage comprising a sheet arranged to join the first mounting portion to the second mounting portion, the second linkage comprising a bend configured such that the second linkage is deformable in the first direction and rigid in a third direction, the third direction being perpendicular to the first direction and different to the second direction.

In examples, the first component may be a part of an exhaust system, and the second component may be a vehicle body.

The second direction may be substantially perpendicular to the third direction.

Each of the first mounting portion and the second mounting portion may comprise an opening adapted to receive a portion of the first component and a portion of the second component, respectively.

The openings of the first mounting portion and the second mounting portion may be substantially parallel to each other.

The second direction may be substantially perpendicular with the opening of the first mounting portion and the opening of the second mounting portion.

Each of the first mounting portion and the second mounting portion may comprise a hinge located opposite to the opening. Each hinge may be located between two linkages which are the outermost linkages.

The opening of the first mounting member and the opening of second mounting member may each comprise a resilient portion arranged to engage the first component and the second component, respectively.

Each of the first mounting member and the second mounting member may comprise an annular housing from which the resilient portion extends, and wherein the first linkage and the second linkage extend between the annular housings.

The resilient portion of each opening of the first and second mounting member may be connected together by a resilient connecting member.

The resilient portion may attenuate vibration.

The first mounting portion and/or the second mounting portion may be openable and may comprise a latch configured to close the first mounting portion and/or second mounting portion. For example, the first mounting portion may comprise a loop that is attachable around the first component, and the loop may be openable, and a latch may be provided to close the loop for coupling the first mounting portion to the first component. The second mounting portion may be the same.

The mounting member may comprise three linkages. The mounting member may comprise two linkages which are rigid in the second direction, and a third linkage located therebetween, which is rigid in the third direction.

The linkages may attenuate vibrations.

The mounting member may be a single component. The mounting member may be moulded as a single component. The single component may comprise a 2k moulding, or an overmoulding.

The mounting member may comprise a thermoplastic, for example a thermoplastic polyester elastomer (TPC-ET).

### Brief Description of Drawings

Example embodiment(s) of the invention are illustrated in the accompanying drawings, in which:
**Figure** 1 illustrates a perspective view of the mounting member;
**Figure** 2 illustrates a top view of the mounting member;
**Figure** 3 illustrates a section view of the mounting member;
**Figure** 4 illustrates a perspective view of the mounting member with a first component mounted to a second component;
**Figure** 5 illustrates a further example mounting member;
**Figure** 6 illustrates a further example mounting member;
**Figure** 7 illustrates a further example mounting member having openable mounting portions and latches;
**Figure 8** illustrates a further example mounting member having openable mounting portions and latches;
**Figure 9** illustrates mounting member example latches for the examples of Figures 7 and 8 in (A) close-up view of the latch mechanism in an open position and (B) close-up view of the latch mechanism in a closed position, as well as, (C) an open mounting member with another latch mechanism design, and
**Figure 10** illustrates further example embodiments (A-C) of a mounting member having opening mounting portions and latches, as well as, (D) an insert removed from the mounting member of (A).

### Detailed description

The illustrative embodiment relates to a mounting member for mounting a first component to a second component. The embodiment includes two mounting portions with at least linkage extending therebetween.

The mounting member is intended for use in an automotive vehicle, for example to mount an exhaust to a vehicle body. However, the mounting member can be used to mount any suitable first component to a suitable second component, particularly where one or both of the components vibrate during use.

Certain terminology may be used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

Where a component is described as 'rigid' in a direction, this means that the component resists movement in the direction, but this does not necessarily mean that all movement is prevented in the direction. Where a component is described as 'rigid' this means that the component is less deformable than a component which is described as 'deformable'.

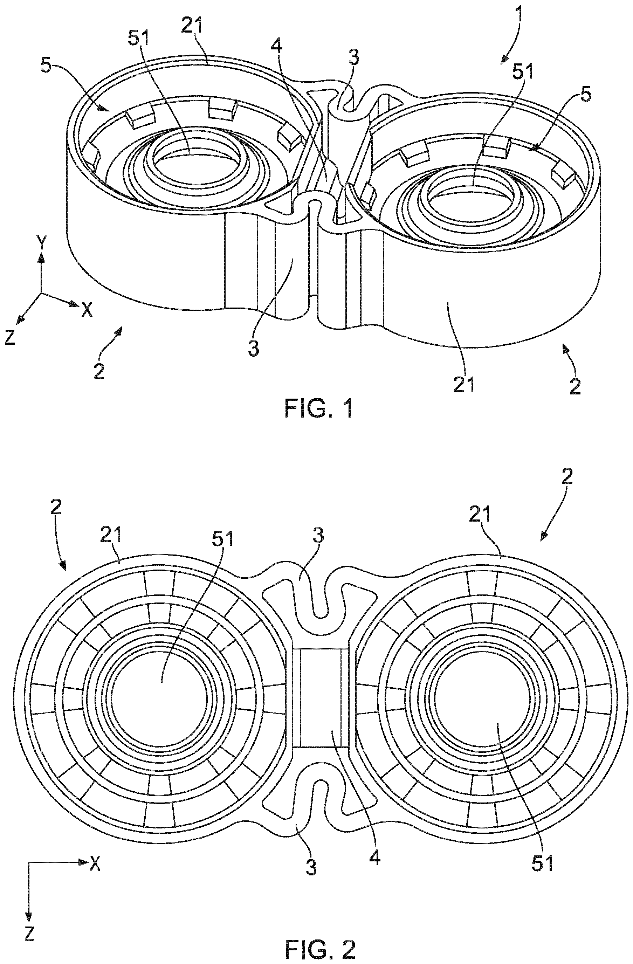

Figures 1-3 show a mounting member 1 which has two mounting portions 2. Each mounting portion 2 has an annular housing 21 which is tubular in shape. Although in the illustrated embodiment the two mounting portions 2 are identical, they could have different sizes and/or geometries. The two mounting portions 2 are arranged such that the axes of the annular housings 21 are parallel, and the ends of the annular housings 21 are coplanar. The cross-sectional shape of each annular housing 21 is circular around the majority of the circumference except for a single flat portion. The flat portion of each annular housing 21 is parallel to and facing the flat portion of the other annular housing 21.

The outer surfaces of the annular housings 21 are interconnected by a pair of first linkages 3 and a second linkage 4. The first linkages 3 and the second linkage 4 are resiliently deformable.

Each first linkage 3 is formed of a sheet which is corrugated. That is, each first linkage 3 comprises a sheet that has a bend in a bending direction such that the sheet has a corrugation. In this example, the sheet has a corrugation formed of three bends in the sheet. In this example, the cross-sectional shape of each first linkage 3 is constant along a direction which is parallel to the axes of the annular housings 21. Each first linkage 3 is corrugated (i.e. bunched to form the bends) in the direction interconnecting the two annular housings 21. Each first linkage 3 is connected on either end to the annular housings 21 such that the two first linkages 3 are equally spaced about the closest points of the two annular housings 21. The first linkages 3 connect to the annular housings 21 either side of the flat portions thereof. Therefore, the first linkages 3 permit movement of the annular housings 21 towards and away from each other, in a direction perpendicular to the axes of the annular housings 21 - i.e., movement in the X direction as illustrated. During such movement the first linkages 3 deform, in particular the bends that form the corrugations in the first linkages 3 deform to permit movement. The first linkages 3 are rigid in at least one other direction. In particular, the first linkages 3 are rigid such that they are not readily deformable in response to an axial movement of one annular housing 21 relative to the other annular housing 21 - i.e., movement in the Y direction as illustrated. The bending direction of the first linkages 3 means that the first linkages 3 would resist such axially directed movement, while permitting movement of the annular housings 21 in a direction perpendicular to the axial direction (X direction), towards and away from each other. The first linkages 3 are resiliently deformable in the direction perpendicular to the axes of the annular housings 21 (X direction).

The second linkage 4 is formed of a sheet which is corrugated. That is, the second linkage 4 comprises a sheet that has a bend in a bending direction such that the sheet has a corrugation. In this example, the sheet has a corrugation formed of three bends in the sheet. In this example, the cross-sectional shape of the second linkage 4 is constant along a direction which is perpendicular to the axes of the annular housings 21. The bending direction of the second linkage 4 is perpendicular to the bending direction of the first linkages 3. The second linkage 4 is corrugated (i.e. bunched to form the bends) in the direction interconnecting the two annular housings 21. The second linkage 4 is connected at either end to the flat portion of the respective annular housings 21. Therefore, the second linkage 4 permits movement of the annular housings 21 towards and away from each other, in a direction perpendicular to the axes of the annular housings 21 - i.e., in the X direction as illustrated. During such movement the second linkage 4 deforms, in particular the bends that form the corrugation in the second linkage 4 deform to permit movement. The second linkage 4 is rigid in at least one other direction. In particular, the second linkage 4 is rigid such that it is not readily deformable in response to opposing movement of the annular housings 21 in a direction perpendicular to the axial direction of the annular housings 21 and perpendicular to a plane intersecting the two annular housings 21 - i.e., in the Z direction as illustrated. The bending direction of the second linkage 4 means that the second linkage 4 would resist such movement, while permitting movement of the annular housings 21 in a direction towards and away from each other. The second linkage 4 is resiliently deformable.

Accordingly, considering the cartesian coordinate system referenced above, where the annular housings 21 might move relative to each other in an X direction, a Y direction, or a Z direction, the perpendicular bending directions of the first linkages 3 and the second linkage 4 means that (i) relative movement in the X direction is permitted by deformation of both the first linkages 3 and the second linkage 4; (ii) relative movement in the Y direction is resisted by the first linkages 3; and, (iii) relative movement in the Z direction is resisted by the second linkage 4.

In various examples, the annular housings 21 are connected by at least one first linkage 3 and at least one second linkage 4. It will be appreciated that any number of first and second linkages 3, 4 could join the annular housings 21.

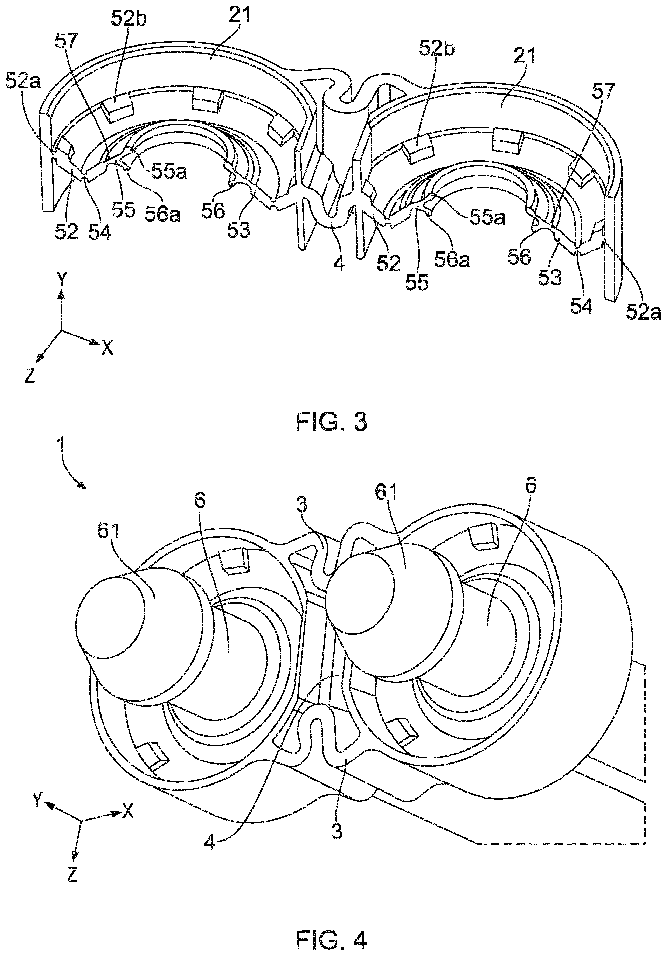

Each mounting portion 2 has a resilient portion 5, as best shown in Figure 3. The resilient portion 5 is annular in shape and defines an opening 51 in the centre. The peripheral edge of each resilient portion 4 is connected to the inside surface of the respective annular housing 21. Each annular housing 21 has a wall thickness which is greater than the resilient portion 5 attached thereto.

Each resilient portion 5 is formed of an outer ring 52, an intermediate ring 53, a first inner ring 55, and a second inner ring 56.

Each outer ring 52 extends inwardly at a non-perpendicular angle from the respective annular housing 21. Each outer ring 52 is connected to the inside surface of the respective annular housing 21 via a first hinge 52a, which has a lower cross-sectional thickness than the thickness of the outer ring 52. Equally spacing around the periphery of each outer ring 52, inside of each first hinge 52a, are a plurality of blocks 52b. Each block 52b extends inwardly around halfway along the respective outer ring 52. Each block 52b has a similar thickness to the thickness of the outer ring 52. The blocks 52b increase the stiffness of the outer ring 52.

Each intermediate ring 53 extends inwardly, at a non-perpendicular angle, from the inner edge of the respective outer ring 52. Each intermediate ring 53 extends inwardly in a direction which is opposite to that which the outer ring 52 extends from the annular housing 21. Between each outer ring 52 and the respective intermediate ring 53 there is a second hinge 54. Each second hinge 54 has a lower cross-sectional thickness than the respective outer ring 52 and the respective intermediate ring 53.

Extending inwardly from the inner edge of each intermediate ring 53 is a first inner ring 55. Each first inner ring 55 extends inwardly at a similar angle to that which the intermediate ring 53 extends from the outer ring 52. Each first inner ring 55 has a first contact ring 55a at the inner edge. Each first contact ring 55a has a circular cross-section, the diameter of which is greater than the thickness of the respective first inner ring 55.

Extending inwardly at a non-perpendicular angle from each first inner ring 55, is a second inner ring 56. Each second inner ring 56 has a similar cross-sectional thickness to the respective first inner ring 55. Each second inner ring 56 has a second contact ring 56a at the inner edge. Each second contact ring 56a has a circular cross-section, the diameter of which is greater than the thickness of the respective second inner ring 56.

Between each first inner ring 55 and respective intermediate ring 53 there is a third hinge 57. The cross-section of each third hinge 57 is thinner than the cross-section of the respective intermediate ring 53 and the cross-section of the respective first inner ring 55.

The mounting member 1 is preferably polymeric and is moulded in a single manufacturing step.

Turning now to Figure 4, the operation of the mounting member 1 is described.

One opening 51 is provided to receive an elongate part 6 of the first component and the second opening 51 is provided to receive an elongate part 6 of the second component. In this illustrative embodiment, the two elongate parts 6 are identical, and could be, for example, attachment pins. In this embodiment each elongate part 6 has a blunt arrowhead 61 at one end, which enables the elongate part 6 to be inserted through the respective opening 51. Each elongate part 6 is inserted through the respective opening 51 in the same direction as the angle at which the first inner ring 55 extends inwardly. The arrowheads 61 then preventing or obstructing removal of the elongate parts 6 from the openings 51.

The first and second contact rings 55a, 56a are stretched radially around the circumference of the respective elongate part 6, applying a circumferential pressure thereto. The first and second inner rings 55, 56 are splayed apart from each other, to apply a circumferential pressure to the respective elongate part 6. This allows varying geometries of elongate part 6 to be secured through the respective opening 51. This also allows variations in the tolerance of the diameter of the elongate parts 6 to be accommodated.

The first, second and third hinges 52a, 54, 57 allow limited movement of the two elongate parts 6 relative to each other. The first, second and third hinges 52a, 54, 57 also attenuate vibration which is transmitted to the mounting member 1 from either elongate part 6.

The two first linkages 3 and the second linkage 4 allow limited movement and rotation of the two elongate parts 6 relative to each other.

The two first linkages 3 and the second linkage 4 attenuate vibration whenever the respective corrugated sheet is compressed or expanded at any part, as this dissipates energy.

The two first linkages 3 and the second linkage 4 provide damping, as well as spring forces to return the two elongate portions 6 to equilibrium positions.

By providing first linkages 3 which are perpendicular to the second linkage 4, vibration is attenuated when the two elongate parts 6 move or rotate relative to each other.

The sheet thicknesses and the shapes of each first and second linkage 3, 4 is determined to provide the required connection stiffness between the first and second components, whilst attenuating undesirable amplitudes and frequencies of vibration.

The dimensions and geometry of each resilient portion 5 is determined to accommodate the respective elongate part 6, to accommodate the range of diameters of each elongate part 6 possible within the tolerance thereof, and to attenuate undesirable amplitudes and frequencies of vibration.

As will be appreciated by the skilled person, the two elongate parts 6 may be different shapes, or not elongate at all. The mounting portions 2 may be affixed to the first and second components via a fixing received through the openings 51, for example a screw or bolt. The mounting portions 2 may not be circular in shape.

The mounting member 1 may be metallic. The mounting member 1 may be manufactured using any suitable manufacturing technique, such as casting or additive manufacturing.

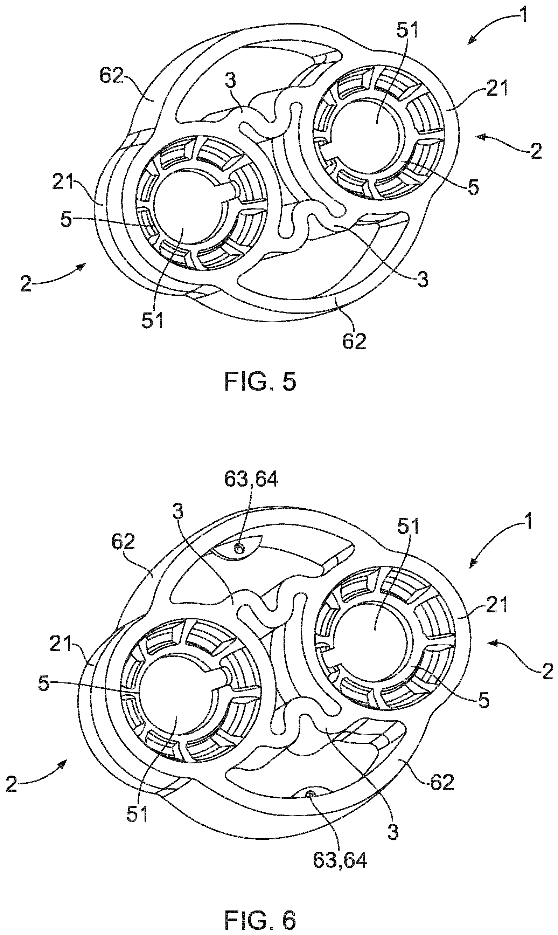

Figures 5 and 6 show similar further examples of a mounting member 1. In these examples the mounting member 1 has two mounting portions 2. Each mounting portion 2 has an annular housing 21 which is generally tubular in shape. Although in the illustrated embodiment the two mounting portions 2 are identical, they could have different sizes and/or geometries. The two mounting portions 2 are arranged such that the axes of the annular housings 21 are parallel, and the ends of the annular housings 21 are coplanar.

The mounting portions 2 are generally as described with reference to the example of Figures 1 to 4, in which they comprise a resiliently deformable opening for coupling to first and second components. In particular, each mounting portion 2 has a resilient portion 5. The resilient portion 5 is annular in shape and defines an opening 51 in the centre. The peripheral edge of each resilient portion 5 is connected to the inside surface of the respective annular housing 21. The resilient portions 5 and openings 51 permit coupling to first and second components in the same manner as described with reference to Figure 4.

As shown in Figures 5 and 6, the outer surfaces of the annular housings 21 are interconnected by a pair of first linkages 3. The first linkages 3 are resiliently deformable.

Each first linkage 3 is formed of a sheet which is corrugated. That is, each first linkage 3 comprises a sheet that has a bend in a bending direction such that the sheet has a corrugation. In this example, the sheet has a corrugation formed of three bends in the sheet. In this example, the cross-sectional shape of each first linkage 3 is constant along a direction which is parallel to the axes of the annular housings 21. Each first linkage 3 is corrugated (i.e. bunched to form the bends) in the direction interconnecting the two annular housings 21. Each first linkage 3 is connected on either end to the annular housings 21 such that the two first linkages 3 are equally spaced about the closest points of the two annular housings 21. The first linkages 3 connect to the annular housings 21 either side of the flat portions thereof. Therefore, the first linkages 3 permit movement of the annular housings 21 towards and away from each other, in a direction perpendicular to the axes of the annular housings 21. During such movement the first linkages 3 deform, in particular the bends that form the corrugations in the first linkages 3 deform to permit movement. The first linkages 3 are rigid in at least one other direction. In particular, the first linkages 3 are rigid such that they are not readily deformable in response to an axial movement of one annular housing 21 relative to the other annular housing 21. The bending direction of the first linkages 3 means that the first linkages 3 would resist such axially directed movement, while permitting movement of the annular housings 21 in a direction perpendicular to the axial direction, towards and away from each other. The first linkages 3 are resiliently deformable in the direction perpendicular to the axes of the annular housings 21.

In the examples of Figures 5 and 6 the first and second mounting portions 2, in particular the annular housings 21, are also linked by loop members 62. The loop members extend between the annular housings 21 in an arcuate form and may or may not have a stiffness that contributes to damping between the first and second mounting portions 2.

The example mounting members 1 of Figures 1 to 5 may be advantageously manufactured from a single material in a single injection moulding process. The mounting members 1 are preferably manufactured from a thermoplastic, for example a thermoplastic polyester elastomer (TPC-ET).

As shown in Figure 6, the example mounting member 1 shown in Figure 5 may be provided with a skeleton located within. The skeleton provides increased stiffness to the mounting member 1. The or each loop member 62 may include a fastening part 63, which is the only exposed part of the skeleton. The skeleton is preferably moulded using a plastics material. The remainder of the mounting member 1 is preferably moulded over the skeleton. The fastening part 63 is preferably used to secure the skeleton in a mould when the remainder of the mounting member 1 is moulded thereover. The fastening part 63 may advantageously be used for attachment of the mounting member 1 to a further component. For example, as shown, the fastening part 63 may include a hole 64 for attachment of the mounting member 1 to a further component by a fastener such as a bolt or screw. The loop members 62 may be considered to be linkages as well.

The example mounting member 1 of Figure 6 may manufactured from two plastics materials. The skeleton may be moulded from a more rigid plastic than the remainder of the mounting member 1. The remainder of the mounting member 1 may preferably be manufactured from a thermoplastic, for example a thermoplastic polyester elastomer (TPC-ET).

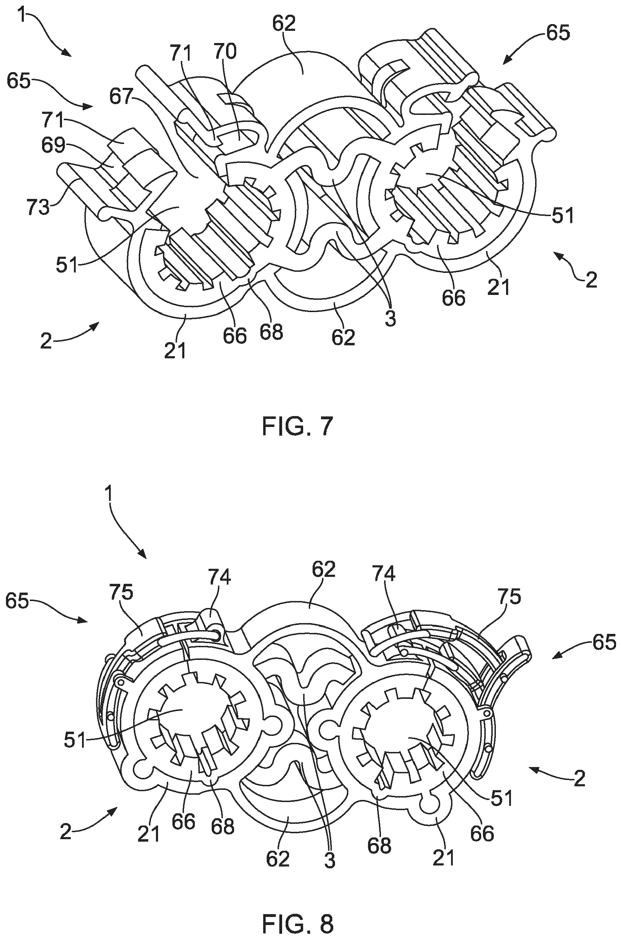

In the examples of Figures 7 to 9B each mounting portion 2 is openable and has a latch 65 provided for closing the respective mounting portion 2. As with previous examples, each mounting portion 2 has an opening 51 for receiving a component. In these examples, each mounting portion 2 is openable, specifically at a split 67, for creating an opening in the mounting portion 2 for insertion/removal of a further component.

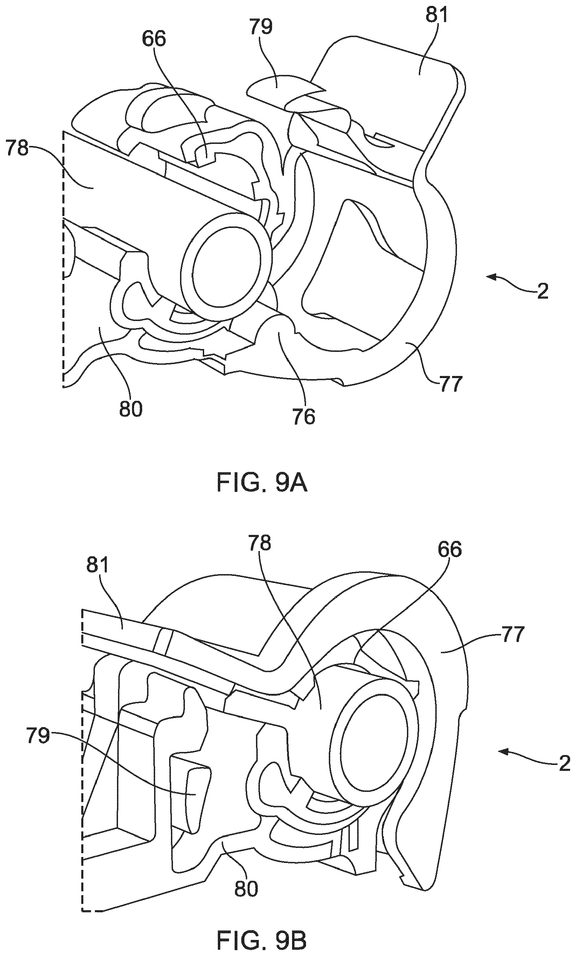

In the examples illustrated in Figures 7 and 8 each mounting portion 2 has a split 67 and a hinge area 68 approximately opposite to the split 67. A latch 65 is provided at each split 67 for closing the annular housing 2. As shown in Figures 7 and 8, the hinge area 68 may comprise a thinned section to increase the flexibility of the mounting portion 2 at that location. In the example of Figures 9A and 9B, a pivot 76 is provided.

In the example of Figure 7 the latch 65 comprises a snap closure having a toothed latch member 69 that is insertable into a toothed slot 70 such that a tooth 71 on the latch member 69 snap-engages a tooth 72 on the slot 70. A lever 73 is provided to disengaging the teeth 71, 72 for opening the latch 65.

In the example of Figure 8, the latch 65 comprises an overcentre latch where one side of the mounting portion 2 has a tooth 74 that is engaged by a levered arm 75 attached to other side of the mounting potion 2. As the levered arm 75 is moved to close the overcentre latch it passes over a centred position and snaps into a closed position. The overcentre latch is openable by lifting the levered arm 75 away from the mounting portion 2.

In the example of Figures 9A to 9C, the mounting member 1 has two mounting portions 2 joined by linking members 3 with bends. Each mounting portion 2 has a latch 65 that comprises a clip assembly having a pivoted clip member 77 that is closable about the further component 78. The pivoted clip member 77 is pivoted at a pivot 76 and includes a toothed latching member 79 arranged to engage a toothed slot 80 on closing. As with the example of Figure 7, a lever 81 is provided for opening the latch 65.

The latches 65 described with reference to Figures 7 to 9C may be configured to clamp against the further component for coupling the mounting member 1 to the further component. As shown in Figures 7 to 9B, each mounting portion 2 comprises an annular insert 66. The annular insert 66 may be resiliently deformable to deform about the further component on closure of the latch 65. As shown, the annular insert 66 may include a gripping pattern.

In the examples shown in Figures 9A to 9C the latch 65 may include one or more cam surfaces to guide the toothed latching member 79 into the toothed slot 80. In such an arrangement, the latch 65 can provide a high clamping force for coupling to the further component 80, while the cam surface(s) can enable opening of the latch 65 with relatively lower force.

In the examples illustrated in Figures 7 to 9C the mounting members 1 have two first linkages 3 extending between the first and second mounting portions 2. However, it will be appreciated that a second linkage, for example such as that described with reference to Figures 1 to 4, and optionally a third linkage, may be provided to connect the first and second mounting portions 2. The first linkages 3 are preferably integrally formed with the annular inserts 66, as illustrated.

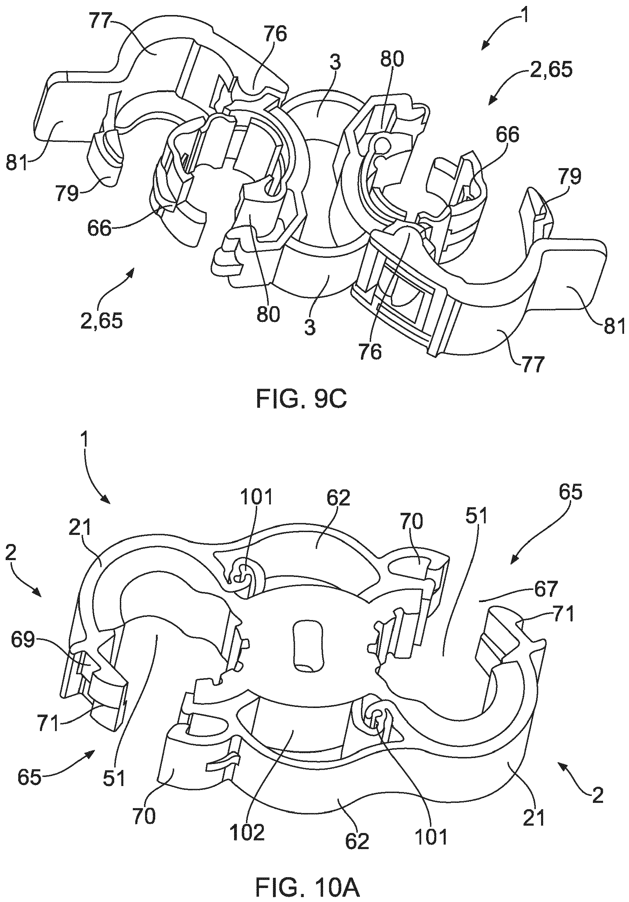

The various example mounting members 1 described herein are preferably provided as a single component. As illustrated in Figures 7 to 9C the mounting members 1 may comprise more than one sub-component, for example a annular housing 21 and an annular insert 66 as shown in Figures 7 to 9C may be distinct sub-components. The sub-components may comprise different materials to provide different characteristics such as thermal resilience and elastic deformability. Such a mounting member 1 may be provided by injection moulding two materials simultaneously, generally known as 2k injection moulding, to form the sub-components. Alternatively, the mounting members 1 may be manufactured using an over-moulding process where, for example, the annular insert 66 is first moulded together with the first linkages 3, and then the annular housings 21 are over-moulded onto the annular inserts 66. Figure 9C illustrates a slight variation of the mounting member 1 shown in Figures 9A and 9B.

In preferred examples the mounting member 1 comprises a thermoplastic, for example a thermoplastic polyester elastomer (TPC-ET).

As shown, in the examples of Figures 7 and 8 the annular housings 21 may be connected by loop members 62 similar to those described with reference to Figures 5 and 6. The loop members 62 may or may not have a stiffness that contributes to damping between the first and second mounting portions 2. As with the previous example, the loop members 62 may be considered to be linkages as well.

Another example embodiments of the mounting member 1 are shown in Figures 10A to 10D, which is similar to that of Figure 7. Each mounting portion 2 of the mounting member 1 of these examples is openable and has a latch 65 provided for closing the respective mounting portion 2. Each mounting portion 2 is openable at a split 67 for insertion or removal of a further component. As with the example shown in Figure 7, the snap closure of each latch 65 has a toothed latch member 69 that is insertable into a toothed slot 70 such that a tooth 71 on the latch member 69 snap-engages a tooth 72 on the slot 70.

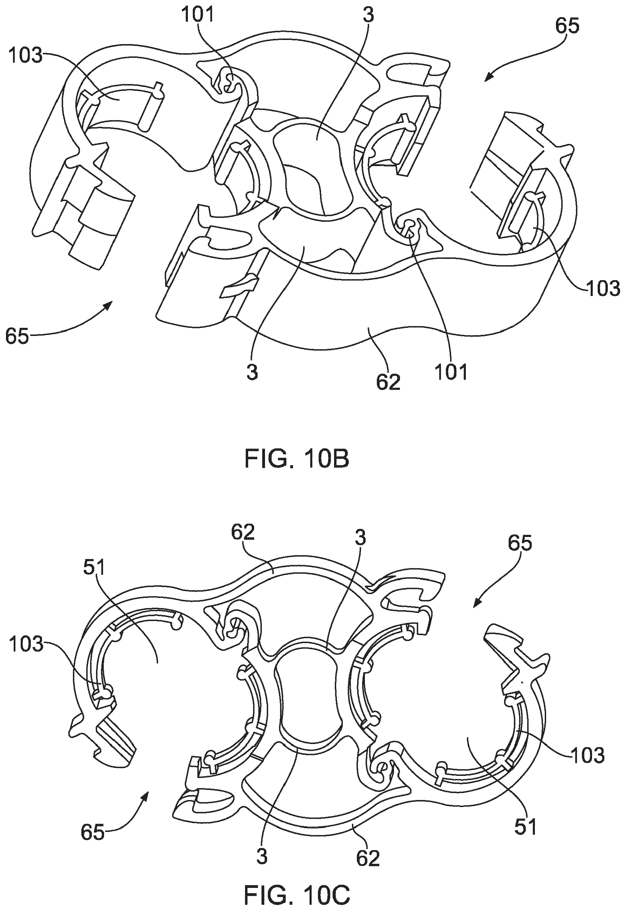

Each mounting portion 2 has a hinge 101 located approximately opposite to the split 67, as best illustrated in Figure 10B. Each hinge 101 extends substantially along the entire thickness of the respective annular housing and is generally U-shaped in plan. The central axis of each hinge 101 is substantially parallel to the central axis of the respective annular housing 21. Each annular housing 21 is divided into two parts, each part being attached to an end of the U-shaped hinge 101 (for 10A-C) on one side and separated from the other part by the split 67 on the side opposite to the hinge 101. Each hinge 101 has a spring arm extended from an end of the U-shape into the centre of the U-shape (10A-C). Each hinge 101 also has a protrusion extending from an inner wall thereof, towards the centre of the U-shape (10A-C). The spring-arm and protrusion interacts when the mounting portion 2 is closed. In the event that the respective hinge 101 fails at a location between the protrusion and the point where the hinge 101 connects to the part of the annular housing 21 which is closest to the protrusion, and when the respective mounting portion 2 is closed and secured in the closed configuration by the respective latch 65, the interaction of the spring-arm and the protrusion maintains the respective mounting portion 2 in the closed configuration.

As in previous examples, the annular housings 21 are linked by loop members 62. In this example the loop members 62 are provided externally to the hinges 101. In other words, the hinges 101 are located between the loop members 62 and the centreline connecting the centres of the two mounting portions 2. This arrangement is advantageous because the safety of the mounting member 1 is improved, because the outside surface of the hinge 101 is shielded. This means that the hinge 101 is protected from interaction with other components.

The annular housings 21 are also linked by linkages 3, as in the previous examples, and which are only visible in Figures 10B and 10C. In this example, the linkages are arcuate, being convex with respect to the centre of the mounting member 1. The loop members 62 may be considered to be linkages as well.

The annular housings 21, hinges 101, latches 65, loop members 62 and linkages 3 are provided as a single component, which is referred to as a housing, and are preferably moulded using a rigid plastic material.

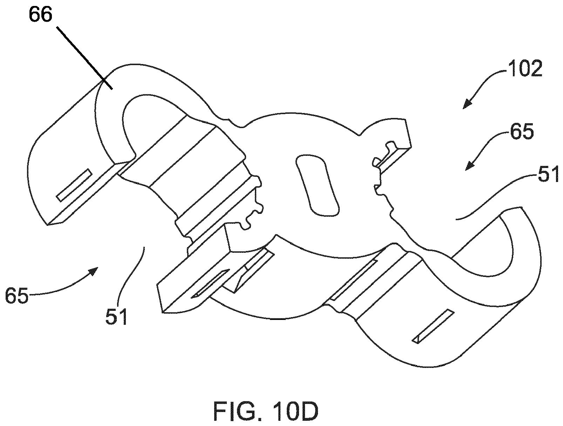

The mounting member 1 of this example also has an insert 102 which provides the annular inserts 66 which are also present in previous examples. Figure 10D illustrates the insert 102 comprising two connected annular inserts 66 when removed from the housing. As with the previous examples, each annular insert 66 may be resiliently deformable to deform about the further component on closure of the latch 65. The annular insert 66 may include a gripping pattern, which is present on one half of the opening 51 in the example of Figure 10A and 10D. The insert 102 also has a connecting portion which connects the two annular inserts 66. The connecting portion is generally circular in plan, with a similar radius to the annular inserts 66 when the annular inserts 66 are in a closed configuration. The insert 102 has a hole through the centre of the connecting portion for providing flexibility thereto.

The insert 102 may be manufactured using a resiliently deformable material. The mounting member 1 may be moulded in two stages, with the insert 102 moulded onto the housing 103. The parts of the insert 102 which are moulded into the annular housings 21 are discontinuous at the split 67 and have a thinned wall thickness in the vicinity of the hinge 101. The thinned wall thickness reduces resistance from the insert 102 to opening and closing of the mounting portions 2, as well as reducing wear to the insert material. In this example the insert 102 is moulded into the annular housings 21 such that the insert 102 engages with moulding anchors 103 in the annular housings 21. Legs of the moulding anchors 103 project radially inwardly from the annular housings 21, and are connected by ribs, such that, during moulding, material to make up the insert 102 surrounds the ribs, and then solidified to secure the insert 102 to the annular housing 21. The insert 102 is also moulded over the linkages 3 such that the linkages 3 are located on either side of the hole through the connecting member of the insert 102. The linkages 3 are surrounded by the insert material. The connecting member of the insert 102 provides additional spring force, attenuation and damping to that provided by the linkages 3.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A mounting member for mounting a first component, for example an exhaust system, to a second component, for example a vehicle body, the mounting member comprising:
a first mounting portion for coupling the mounting member to the first component;
a second mounting portion for coupling the mounting member to the second component; and
a linkage comprising a sheet arranged to join the first mounting portion to the second mounting portion,
wherein the sheet comprises a bend configured such that the linkage is deformable in a first direction and rigid in a second direction, the first direction being perpendicular to the second direction.

2. The mounting member of claim 1, comprising a plurality of linkages, each linkage comprising a sheet arranged to join the first mounting portion to the second mounting portion, wherein the sheet of each linkage comprises a bend configured such that the linkage is deformable in a first direction and rigid in a second direction, the first direction being perpendicular to the second direction.

3. The mounting member of claim 2, wherein the plurality of linkages comprises four linkages.

4. The mounting member of claim 1, further comprising a second linkage comprising a second sheet arranged to join the first mounting portion to the second mounting portion, and wherein the second linkage comprises a bend configured such that the second linkage is deformable in the first direction and rigid in a third direction, the third direction being perpendicular to the first direction and different to the second direction.

5. A mounting member according to claim 2, wherein the second direction is substantially perpendicular to the third direction.

6. A mounting member according to any preceding claim, wherein each of the first mounting portion and the second mounting portion comprises an opening adapted to receive a portion of the first component and a portion of the second component, respectively.

7. A mounting member according to claim 6, wherein the openings of the first mounting portion and the second mounting portion are substantially parallel to each other.

8. A mounting member according to claim 6 or claim 7, wherein the second direction is substantially parallel with the opening of the first mounting portion and the opening of the second mounting portion.

9. A mounting member according to any of claims 6 to 8, comprising a plurality of linkages and wherein each of the first mounting portion and the second mounting portion comprises a hinge located opposite to the opening, and wherein each hinge is located between two of the plurality of linkages which are the outermost linkages.

10. A mounting member according to any preceding claim, wherein the opening of the first mounting member and the opening of second mounting member each comprise a resilient portion arranged to engage the first component and the second component, respectively.

11. A mounting member according to claim 10, wherein each of the first mounting member and the second mounting member comprises an annular housing from which the resilient portion extends, and wherein the first linkage and the second linkage extend between the annular housings.

12. A mounting member according to either of claim 10 or claim 11, wherein the resilient portion of each opening of the first and second mounting members are connected together by a resilient connecting member.

13. A mounting member according to any preceding claim, wherein the first mounting portion and/or the second mounting portion is openable and comprises a latch configured to close the first mounting portion and/or the second mounting portion.

14. A mounting member according to any preceding claim, wherein the mounting member is a single component, for example moulded as a single component.
